# EUROPEAN PATENT SPECIFICATION

(11) **EP 2 237 503 B1**
(45) Date of publication and mention of the grant of the patent: **29.08.2012**
(21) Application number: 09290239.4
(22) Date of filing: 31.03.2009
(51) Int. Cl.: H04L 12/56, H04L 29/06

(54) **Application admission based on mutualized probabilistic traffic analyzers**
Anwendungszulassung basierend auf geteilten probabilistischen Verkehrsanalysatoren
Admission d'application basée sur des analyseurs de trafic probabilistiques mutualisés

(43) Date of publication of application: 06.10.2010
(73) Proprietor: Alcatel Lucent, 75007 Paris (FR)
(72) Inventor: Pecci, Pascal, 75008 Paris (FR); Popa, Daniel, 75008 Paris (FR)
(74) Representative: Sciaux, Edmond

(56) References cited:
- WO-A-2008/056349
- US-A1- 2002 114 274

## Description

### FIELD OF THE INVENTION

The present invention relates generally to flow admission control in IP communications networks carrying different traffic types, and more particularly to real-time flow admission decision that best meets the security policies.

### BACKGROUND OF THE INVENTION

With the increasing number of networks users, the evolving network technologies, and the expanding network traffic, networks maintainability is becoming more and more severe. In particular, faced with diversified networks uses and countless threats, the best-use of networks resources within security policies is becoming more and more unreachable.

In fact, networks are now faced with new types of bedevilments originating from within and outside their respective perimeters. Internal bedevilments arise from users, unknowingly or even intentionally, downloading/accessing to unsafe content or running unauthorized applications. Specifically, the endless growing pool of IP technologies (e.g. multimedia streaming, IPTV, VoIP, P2P, instant messaging, data sharing, remote access, online games, web browsing) represents unique challenges to keep networks safeties. Theses challenges are further amplified by modern networks complexities (e.g. wireline/wireless connection, Virtual Private Network, changeable protocols) as well as diversified IP applications sophistication (data encryption, IP traffic camouflaging, heterogeneous applications and services with distinct quality of service requirements and access rights).

Hence, now more than ever, networks managers need to scrutinize dynamic traffic at least to understand:
- in what capacity their networks are used ;
- the different flow within the dynamic traffic ;
- who is using their networks ;
- the security policies obedience ;
- the quality of service agreement.

To that end, admission control and policing are the key component for networks safeties assurance. In fact, network admission control and policing permit:
- to provide quality of service (QoS) guarantees: simultaneously, ensuring the fair sharing of the available network resources between multiple real-time flows and rejecting flows which could cause congestion or unacceptable performance deterioration in the network ;
- to determine the extend to which network resources are utilized ;
- to inspect traffic : flows identification and characterization (e.g. application, source, destination, duration) and session behavior analysis (e.g. state change) ;
- to blocks malicious flows or sessions, according to security policies.

It is to be noted that admission control and policing complete more than substitute security techniques already in use such as Firewall, intrusion detection system or authentication means.

Admission control and policing techniques mainly use session and/or packet-level mechanisms such as traffics identification and classification techniques.

In fact, admission control and policing, including traffic identification and classification techniques, comprises an emerging area in IP networking which are becoming more and more visible from wireline and wireless IP services providers.

Several techniques of traffic classification exist in the literature and all of them fall into two broad methods:
- deterministic classification methods assigning to a given flow only one application or, conceivably, the attribute "unknown". This is done by considering features that uniquely characterize applications (such as the port-based methods) ;
- probabilistic classification methods assigning to a given flow one or more probabilities of belonging to each class of interest (such as flow signature-based methods, supervised machine-learning based methods and Deep Packet Inspection (DPI) methods). This is done via pattern, statistical, heuristic, numerical or behavioral analysis. The result is generally formatted as follow: "there is n% of probability that this flow belongs to the application "Y" ", where n is in [0 100].

Deterministic classification methods are largely ineffective today because several sophisticated applications (e.g. P2P, network intrusions, malicious applications) may arrogate specific metrics conventionally used with fair and authorized applications so as to be undetectable.

Traffic classification techniques, mainly probabilistic ones, are becoming widely deployed as they allow potential applications required by admission control and policing. In fact, probabilistic traffic classification techniques, such as DPI, are capable to:
- classify applications : this function provide one of the fundamental controls that used for offering tiered services and for controlling applications ;
- analyze session behavior by tracking session duration, session state change, session members and session quality of experience ;
- control the network key performance indicators (e.g. bandwidth) ;
- blocking malicious applications and security threats (e.g. detecting network intrusion, applying parental controls, filtering URL, filtering targeted service offers)

in real-time and on a complete session-by-session basis from Layer 2 to Layer 7 of the Open System Interconnection (OSI) model.

The document WO 2008/056349 describes a probabilistic method for identifying media sessions over IP and network packets as belonging or not belonging to a media session, based on packet characteristic extraction.

Hence, traffic classification allows fine-grained admission control and policing at the level of individual subscriber of flow within IP networks.

Nevertheless and despite the above-cited abundant traffic classification capabilities, while a concrete deployment of an admission control and policing mechanism, more than one problem can be raised:
- there are many available methods. The heterogeneity of those offers makes it hard to choose among them, leading to different dilemmas such as performance/speed, resolution/privacy. As an example, vendors of DPI equipment compete on a range of technical criteria, including :
   o the number of applications or protocol signatures that they have compiled. They also compete on their ability to recognize protocols, as well as the speed at which the update libraries in light of changing applications and traffic patterns ;
   o the size of links or the number of subscribers (some vendors claim to be able to handle traffic on links running at 80 Gbit/s or more and manage networks with millions of customers) ;
   o the performances of the computer holding the traffic classification mean (such as multi-threading and parallel processing may be required) ;
   o the ability to handle security threats such as Distributed Denial of Service (DDoS).
- networks domains may have different users and uses resulting in a varied set of ever-changing admission control en policing entries ;
- the majority of the implemented traffic classification means, and mainly DPI, are not standardized and their meaning is somewhat elastic and vary from one network to another, particularly, in regards with confidentiality and privacy ;
- the asks for a budget-conscious and effective admission control and policing means.

Hence, up to date techniques do not promote a proficient and budget-conscious admission control and policing method.

One object of the invention is to provide an admission control and policing method that is scalable, proficient and budget-conscious.

Another object of the present invention is to provide a novel inter-networks framework for admission control and policing.

Another object of the present invention is to provide a programmable and customizable cooperative admission control and policing within heterogeneous networks.

Another object of the present invention is to provide a dynamic cooperative environment for admission control and policing.

Another object of the present invention is to provide each network within a heterogeneous set of networks with the best admission control and policing capabilities existing within the heterogeneous network.

### DESCRIPTION OF THE DRAWING

The objects, advantages and other features of the present invention will become more apparent from the following disclosure. The following nonrestrictive description of a preferred embodiment of the invention is given for the purpose of exemplification only with reference to the accompanying drawings in which:
- Fig.1 is a schematic diagram illustrating interconnected IP networks in which the present invention is implemented ;
- Fig.2 is a schematic diagram illustrating the admission control and policing procedure.

Similar graphical symbols refer to identical components throughout the drawings.

### SUMMARY OF THE INVENTION

The present invention relates to a method for admission control and policing within IP packet-based networks, said IP packet-based networks including a first admission control and policing node being provided with a probabilistic traffic analyzer, said method
- including a second admission control and policing node being provided with a probabilistic traffic analyzer, a decision agent and a set of security policies, first admission control and policing node and second admission control and policing node being consecutively accessible by an incoming packet ; and
- comprising the following steps:
   - analyzing the incoming packet by the probabilistic traffic analyzer of the first admission control and policing node ;
   - transmitting the probabilistic results which is obtained by the probabilistic traffic analyzer and concerning the incoming packet to the second admission control and policing node ;
   - receiving, successively or jointly, the transmitted probabilistic results and the incoming packet by the second admission control and policing node ;
   - analyzing the received incoming packet by the probabilistic traffic analyzer of the second admission control and policing node ;
   - correlating, by the decision agent, the probabilistic results, obtained by the probabilistic traffic analyzer, and the received probabilistic results, both concerning the incoming packet ;
   - deciding by the decision agent according to the correlation results and the set of security policies.

The present invention further relates to an IP packet-based networks including a first admission control and policing node being provided with a probabilistic traffic analyzer, said IP packet-based networks
- including a second admission control and policing node being provided with a probabilistic traffic analyzer, a decision agent and a set of security policies, first admission control and policing node and second admission control and policing node being consecutively accessible by an incoming packet; and
- comprising:
   - means for transmitting the probabilistic results obtained by the probabilistic traffic analyzer of the first admission control and policing node and concerning the incoming packet to the second admission control and policing node;
   - means for receiving, successively or jointly, the transmitted probabilistic results and the incoming packet by the second admission control and policing node ;
   - means for correlating the probabilistic results, obtained by the probabilistic traffic analyzer of the second admission control and policing node, and the received probabilistic results, both concerning the incoming packet ;
   - a decision agent for deciding according to the correlation results and the set of security policies.

### DETAILED DESCRIPTION OF ILLUSTRATIVE EMBODIMENTS

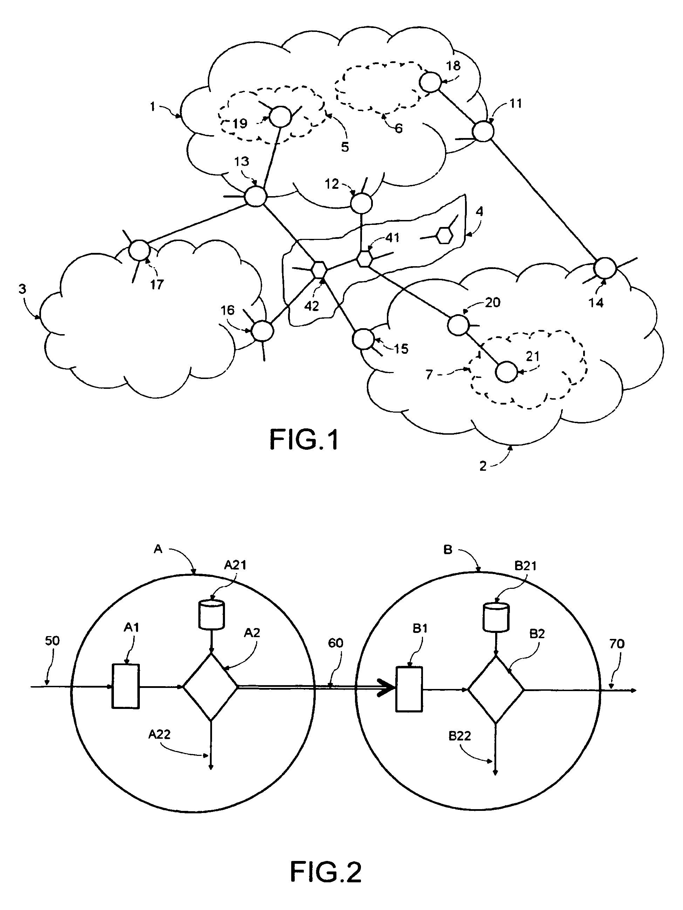

Various embodiments of methods described herein may be performed in data communications system illustrated in Figure 1. The system includes:
- transit networks 4 ;
- edge networks 1-3, each network may comprises one or more sub-networks 5-7 ;
- a plurality of Admission Control and Policing (ACP) nodes 11-21 belonging to these edge networks and sub-networks ;

Transit networks 4 provide Internet connectivity and interconnect edge networks. Transit networks 4 are generally the property of Internet Service Providers (such as France Telecom or Sprint).

Edge networks 1-3 are those connect mostly end-hosts. Edge networks 1-3 may be, in combination or individually, for example the IP network of:
- a multi-department university comprising for example the administrative staff sub-network 5 and the engineering researchers sub-network 6 ;
- a multisite company owning a first agency edge network 2 on site X and a second agency edge network 3 on site Y ;
- governmental institutions comprising spatially distributed edge networks 1-3.

In another embodiment, the Public Switched Telephony Networks (PSTN) 4 are connected to edge networks 1-3 via telephony to IP gateways 41 , 42.

An ACP node comprises a set of functionality which may be implemented in an independent network node device or held by any other kind of access device such as router, server, bridge, border gateway. Preferably, ACP nodes are edge nodes 11-18 as it is preferable to deploy ACP functionalities in access points to edge networks 1-3 or sub-networks 5-7. Otherwise, ACP nodes may be also core nodes 19-21.

Within the heterogeneous IP network diagrammed in figure 1, IP packet flow may cross two or more edge networks 1-3 and/or sub-networks 5-7. Hence, an IP packet flow may successively cross two or more ACP nodes 11-21, such as:
- from ACP node 15 to ACP node 13 ;
- from ACP node 13 to ACP node 15 ;
- from ACP node 16 to ACP node 20 ;
- from ACP node 21 to ACP node 20 ;
- from ACP node 17 to ACP node 13.

With reference to figure 2, there is shown two successive ACP nodes A and B, being, respectively, the ingress and the egress node of a certain IP traffic. The ACP node A, as well as B, may be an edge node 11-18 or a core node 19-21. The term "two successive ACP nodes", used herein, is intended to mean a network link involving only two active ACP nodes but it may comprise any other required network device. An ACP node is said to be active when it is in function.

An ACP node A (respectively B) comprises a probabilistic traffic analyzer A1 (respectively B1) and a decision agent A2 (respectively B2).

As non-exhaustive examples of probabilistic traffic analyzers A1, B1, one can mention:
- any probabilistic traffic classification means which can more or less accurately identify an application or a protocol in use within a network, such as Deep Packet Inspection (DPI) based, flow behavior based and machine-learning based IP traffic classification methods ;
- any network intrusion or malicious-use detection means.

In other words, the probabilistic analyzers A1, B1 are any means in which both false positives and false negatives are unavoidable.

The incoming packet 50 in the ACP node A is analyzed by the probabilistic traffic analyzer A1 whose output interpretation may take, for examples, the following form:
- there is a probability of n% that the incoming packet 50 belongs to the application X where X is a referred application (e.g. P2P, Skype) ;
- there is a probability of n% that the incoming packet 50 belongs to a malicious application (e.g. a network intrusion) ;
- there is a probability of n% that the incoming packet 50 belongs to a malicious session (e.g. remote monitoring session)
where n is in [0 100]. The probabilistic analyzer output may be codified by descriptors (e.g. "absolutely", "somewhat", "doubtfully") or by colors (e.g. "red", "green", "orange").

It is to be noted that with certain probabilistic traffic analyzers A1 and/or B1, more than one incoming packet 50, randomly or deterministically selected from the ingressing IP traffic, are required, but this does not change the general description herein.

The decision agent A2 (respectively B2) is configured with user defined rules stocked in the policies database A21 (respectively B21).

It is to be noted that A and B belongs to two different network domain. Hence, different distinguishing features may be identified between the ACP node A and the ACP node B:
- the probabilistic traffic analyzer means A1 and B1 may have different performances (such as in terms of analysis depth, speed, technique in use, resolution) and different interests (such as applications, sessions, network intrusions, malicious uses, data leakage) ;
- the policies databases A21 and B21 may be differently configured.

In particular, the policies databases A21, B21 comprise automatic and/or user defined entries. These entries include concerned applications, sessions and uses as well as a set of thresholds and rules. Thresholds are defined in connection with the probabilistic analyzer output. A rule permits to determine a network instruction.

Once the probabilistic traffic analyzer A1 provides a probabilistic output concerning the incoming traffic 50, the decision agent A2 is configured to:
- free the incoming packet 50 in its transmission path wherein the next ACP node is the ACP node B ; and
- transmit the probabilistic result concerning the incoming packet 50 and provided by probabilistic traffic analyzer A1 towards the next ACP node B,
whatever it is the output of the probabilistic traffic analyzer A1. These two instructions are diagrammed by the link 60 on figure 2.

The probabilistic output may comprise:
- one or more complete results, such as: 75% a remote monitoring, 40% a network intrusion or 100% a Bittorrent ; and/or
- a marginal result, such as "unknown" or "unidentified".

The probabilistic result concerning the incoming packet 50 may be conveyed from the ACP node A to the ACP node B with a signaling protocol.

In another embodiment, the ACP node A generates a new packet with higher priority than the incoming packet 50 so as to reach the ACP node B before the incoming packet 50. The incoming packet 50 and its correspondent probabilistic result given by the probabilistic traffic analyzer A1 are both or individually marked so as to be associable in the ACP node B.

In another embodiment, no signaling protocol is needed. The probabilistic result may be carried by it correspondent incoming packet 50.

Other information other than the probabilistic results may be conveyed from the ACP node A to the ACP node B. This information may include, as non-limitative examples,
- the IP network to which belongs the ACP node A ;
- identifiers of the ACP node A (e.g. IP address, domain) ;
- information about the probabilistic traffic analyzer A1 (e.g. version, software in use) ;
- the arrival time and the analysis time of incoming packet 50.

The probabilistic result is transmitted in such a way that it reaches the ACP node B at the same time or before its correspondent incoming packet 50.

Once the packet arrives to the ACP node B, it is analyzed by the probabilistic traffic analyzer B1. It is to be noted that the probabilistic traffic analyzer B1 may focus on different, more or less aspects than what as already scanned by the probabilistic traffic analyzer A1.

The output of the probabilistic traffic analyzer B1 is forwarded to the decision agent B2.

At this time, the decision agent B2 gathers:
- the probabilistic result given by the probabilistic traffic analyzer B1 ; and
- the probabilistic result retrieved from the probabilistic traffic analyzer A1,
both concerning the same incoming packet 50.

Subsequently, based on the set of probabilistic results and the policies database B21, the decision agent B2 is in charge of deciding whether or not the incoming packet 50 should be
- accepted by freeing it so as to it continues its transmission path, diagrammed by the link 70 on figure 2 ; or
- rejected, diagrammed by the link B22 on figure 2.

In another embodiment, the decision agent accepts the incoming packet 50 with requesting the modification of certain characteristics of the incoming packet 50 (such as priority, allocated bandwidth).

The decision agent is charge of:
- correlating the probabilistic results given by probabilistic traffic analyzers A1 and B1 ;
- taking into consideration the policies database B21 entries ; then
- acting accordingly.

It is to be understood that the term "probabilistic results correlation" is intended to have a precise engineering or mathematical , meaning such as: values averaging; values weighting; values summation/deduction, values sorting and comparison.

Probabilistic results correlation increases the rightfulness of the decision taken by the decision agent B2 ("Two opinions are better than one").

Preferably, the probabilistic correlation procedure depends on the ACP node A, transmitter of the probabilistic results. This dependence reflects the trust level (e.g. "trust fully", "trust marginally", "trust ultimately", "do not trust") accorded to the ACP node transmitter of the probabilistic results.

In another embodiment, the probabilistic traffic analyzer B1 may be absent or deactivated, resulting in a full trust on the received probabilistic results but deciding according to the local policies database B21.

Policies databases A21, B21 comprise
- security policies, such as access rules and application permission rules ;
- controls in connection with probabilistic traffic analyzers A1, B1 outputs (thresholds, variances, comparators, correlation means) ;
- action rules, such as "accept", "reject", "change priority", "shape".

It must be noted that, in absence of the probabilistic result transmitted from the ingress ACP node A (due, for example, to an excess delay or any malfunctioning in the probabilistic results transmission), the ACP node B2 acts, for example,
- as it receives unenlightening information (such as "not assigned" , "undefined", "undetermined", "unknown", 50% anywhere) ; or
- exactly as the ACP node A if there is a further ACP node C in the incoming packet 50 transmission path.

In another embodiment, more than two successive ACP nodes may be considered, such as ACP node 12 - ACP node 20 - ACP node 21 (see figure 1). In this case, the calculated probabilistic results by the ACP node 12 and by the ACP node 20 are directly or intermediately transmitted to the ACP node 21. The probabilistic results correlation procedure makes use of all of them.

In an embodiment, the ACP node B may not be provided with a probabilistic traffic analyzer B1. In this case, the decision agent B2 utilizes only the received probabilistic results from ACP nodes equipped with probabilistic traffic analyzers and the local policies database B21.

Different methods may be adopted so as to let an ACP node X whether it has to transmit or to receive the probabilistic results. As examples,
- an ACP node X linked to a network N, whatever it is an edge network or a sub-network, is configured to transmit the calculated probabilistic results and accept each received outgoing packet from the network N. Hence, its decision agent is passive. Conversely, it is configured to transmit nothing and its decision agent acts according to the received and locally calculated probabilistic results ;
- when the probabilistic result is carried by the incoming packet, then the ACP node X may use it (if it is exist) or provide it (if it is absent) ;
- in the case of more than two successive ACP nodes, any indicator (flag, character, increment) may be added to the transmitted results in order to indicate to the receiving ACP node whether it utilizes or not the received probabilistic results.

In another embodiment concerning the ACP node A, the incoming packet acceptation and the probabilistic results transmission may be conditioned rather than automated. For example, one or more minimum thresholds per application and/or per session may be defined (e.g. if a flow F has a probability superior than 99% to be a P2P application, then block this flow (link A22 on figure 2) - there is no need to accept this flow and transmit this probability).

An illustrative example according to some herein described embodiments is presented in the following:
- the ACP nodes A and B belong, respectively, to the edge network of a company "C" and the edge network of an university "U" ;
- the probabilistic traffic analyzers A1 and B1 are two deep packet inspection modules with different performances ;
- the probabilistic result obtained by the deep packet inspection module A1 and to be communicated to the ACP node B is as follow: "the incoming packet 50 has a probability of 80% to be from the Bittorrent application" ;
- the probabilistic result obtained by the deep packet inspection module B1 of the university "U" is as follow "the incoming packet 50 has a probability of 60% to be from the Bittorrent application" ;
- a set of policies comprised within the policies database B21 of the university "U" say : " trust fully on the communicated probabilistic results from the ACP node A of the company "C" if these results concern the Skype application", "Correlation procedure for any probabilistic results concerning others applications than the Skype one and transmitted from the ACP node A of the company "C" is as follow: Cor_result= 0.4*Received_result +0.6*Local_result", "If Cor_result > 75% then accept the incoming packet, else reject it".
- According to the above set of policies and probabilistic results, Cor_result= 68%. Hence, the incoming packet is rejected.

The probabilistic results exchange between ACP nodes leads to an unprecedented "visibility" into deeper levels of networks traffic to identify and remedy vulnerabilities like unauthorized access/applications, viruses and data leakage.

The present invention provides several technical advantages over the conventional use of ACP node. For example, according to one embodiment of the present invention,
- the consistency of the ability to respond to security threats is increased. As a result, shared data can be efficiently processed and diffused across multiple networks ;
- a IP network may benefit of the best available ACP node performances within the interconnected heterogeneous environment. Advantageously, the present invention concerns inter- as well as intra-networks interconnections.

It is must be noted that the present invention in an improvement over existing techniques because actual usage is used to provide individually taken admission decision, rather than employing a cooperative and distributed flow admission control and policing.

The appearance of the phrases "in an embodiment" or "in another embodiment" in various places throughout the specification are not necessarily all referring to the same embodiment. Furthermore, the particular features, structures, or characteristics may be combined in any suitable manner in one or more embodiments.

## Claims

1. A method for admission control and policing within IP packet-based networks, said IP packet-based networks including a first admission control and policing node (A) being provided with a probabilistic traffic analyzer (A1), said method being **characterized in that** it
- includes a second admission control and policing node (B) being provided with a probabilistic traffic analyzer (B1), a decision agent (B2) and a set of security policies (B21), first admission control and policing node (A) and second admission control and policing node (B) being consecutively accessible by an incoming packet (50) ; and
- comprises the following steps:
• analyzing the incoming packet (50) by the probabilistic traffic analyzer (A1) of the first admission control and policing node (A) ;
• transmitting the probabilistic results which is obtained by the probabilistic traffic analyzer (A1) of the first admission control and policing node and concerning the incoming packet (50) to the second admission control and policing node (B) ;
• receiving, successively or jointly, the transmitted probabilistic results and the incoming packet (50) by the second admission control and policing node (B) ;
• analyzing the received incoming packet (50) by the probabilistic traffic analyzer (B1) of the second admission control and policing node (B) ;
• correlating, by the decision agent (B2), the probabilistic results, obtained by the probabilistic traffic analyzer (B1) of the second admission control and policing node, and the received probabilistic results, both concerning the incoming packet (50) ;
• deciding by the decision agent (B2) according to the correlation results and the set of security policies (B21).

2. The method of claim 1, wherein the analysis of the incoming packet (50) is a deep packet inspection.

3. The method of claim 1 or 2, wherein the decision agent decisions comprise the acceptance of the incoming packet (50) with the request of the modification of certain characteristics of the incoming packet (50).

4. The method of any one of claims 1 to 3, wherein the probabilistic results, obtained by the probabilistic traffic analyzer (A1) of the first admission control and policing node (A), are transmitted to the second admission control and policing node (B) with a signaling protocol.

5. The method of claim 1 or 3, wherein the probabilistic results, obtained by the probabilistic traffic analyzer (A1) of the first admission control and policing node (A), are marked within the incoming packet (50).

6. An IP packet-based network including a first admission control and policing node (A) being provided with a probabilistic traffic analyzer (A1), said IP packet-based network being **characterized in that** it
- includes a second admission control and policing node (B) being provided with a probabilistic traffic analyzer (B1), a decision agent (B2) and a set of security policies (B21), first admission control and policing node (A) and second admission control and policing node (B) being consecutively accessible by an incoming packet (50) ; and
- comprises:
• means for transmitting the probabilistic results obtained by the probabilistic traffic analyzer (A1) of the first admission control and policing node (A) and concerning the incoming packet (50) to the second admission control and policing node (B) ;
• means for receiving, successively or jointly, the transmitted probabilistic results and the incoming packet (50) by the second admission control and policing node (B) ;
• means for correlating the probabilistic results, obtained by the probabilistic traffic analyzer (B1) of the second admission control and policing node (B), and the received probabilistic results, both concerning the incoming packet (50) ;
• a decision agent (B2) for deciding according to the correlation results and the set of security policies (B21)

7. The apparatus of claim 6 wherein the probabilistic traffic analyzer is a deep packet inspection module.

## Patentansprüche

1. Verfahren zur Zulassungs- und Überwachungsregelung innerhalb von paketbasierten IP-Netzwerken, wobei die besagten paketbasierten IP-Netzwerke einen ersten Zulassungs- und Überwachungsregelungsknoten (A) umfasst, welcher mit einer Einrichtung zur probabilistischen Verkehrsanalyse (A1) versehen ist, wobei das Verfahren **dadurch gekennzeichnet ist, dass** es
- einen zweiten Zulassungs- und Überwachungsregelungsknoten (B) umfasst, welcher mit einer Einrichtung zur probabilistischen Verkehrsanalyse (B1), einem Entscheidungsagenten (B2) und einem Satz von Sicherheitsrichtlinien (B21) versehen ist, wobei der erste Zulassungs- und Überwachungsregelungsknoten (A) und der zweite Zulassungs- und Überwachungsregelungsknoten (B) nacheinander für ein eingehendes Paket (50) zugänglich sind; und
- die folgenden Schritte umfasst:
• Analysieren des eingehenden Pakets (50) durch die Einrichtung zur probabilistischen Verkehrsanalyse (A1) des ersten Zulassungs- und Überwachungsregelungsknotens (A);
• Übertragen der probabilistischen Ergebnisse, die von der Einrichtung zur probabilistischen Verkehrsanalyse (A1) des ersten Zulassungs- und Überwachungsregelungsknotens erzielt wurden und das eingehende Paket (50) betreffen, an den zweiten Zulassungs- und Überwachungsregelungsknoten (B);
• Empfangen, nacheinander oder gleichzeitig, der übertragenen probabilistischen Ergebnisse und des eingehenden Pakets (50) an dem zweiten Zulassungs- und Überwachungsregelungsknoten (B);
• Analysieren des empfangenen eingehenden Pakets (50) durch die Einrichtung zur probabilistischen Verkehrsanalyse (B1) des zweiten Zulassungs- und Überwachungsregelungsknotens (B);
• Korrelieren, durch den Entscheidungsagenten (B2), der probabilistischen Ergebnisse, die von der Einrichtung zur probabilistischen Verkehrsanalyse (B1) des zweiten Zulassungs- und Überwachungsregelungsknotens erzielt wurden, und der empfangenen probabilistischen Ergebnisse, die beide das eingehende Paket (50) betreffen;
• Entscheiden, durch den Entscheidungsagenten (B2), gemäß den Korrelationsergebnissen und dem Satz von Sicherheitsrichtlinien (B21).

2. Verfahren nach Anspruch 1, wobei die Analyse des eingehenden Pakets (50) eine Deep Packet Inspection ist.

3. Verfahren nach Anspruch 1 oder 2, wobei die Entscheidungen des Entscheidungsagenten die Annahme des eingehenden Pakets (50) mit der Anforderung für die Änderung bestimmter Merkmale des eingehenden Pakets (50) umfassen.

4. Verfahren nach einem beliebigen der Ansprüche 1 bis 3, wobei die von der Einrichtung zur probabilistischen Verkehrsanalyse (A1) des ersten Zulassungs- und Überwachungsregelungsknotens (A) erzielten probabilistischen Ergebnisse mit einem Signalisierungsprotokoll an den zweiten Zulassungs- und Überwachungsregelungsknoten (B) übertragen werden.

5. Verfahren nach Anspruch 1 oder 3, wobei die von der Einrichtung zur probabilistischen Verkehrsanalyse (A1) des ersten Zulassungs- und Überwachungsregelungsknotens (A) erzielten probabilistischen Ergebnisse innerhalb des eingehenden Pakets (50) markiert werden.

6. Paketbasiertes IP-Netzwerk, umfassend einen ersten Zulassungs- und Überwachungsregelungsknoten (A), der mit einer Einrichtung zur probabilistischen Verkehrsanalyse (A1) versehen ist, wobei das besagte paketbasierte Netzwerk **dadurch gekennzeichnet ist, dass** es
- einen zweiten Zulassungs- und Überwachungsregelungsknoten (B) umfasst, welcher mit einer Einrichtung zur probabilistischen Verkehrsanalyse (B1), einem Entscheidungsagenten (B2) und einem Satz von Sicherheitsrichtlinien (B21) versehen ist, wobei der erste Zulassungs- und Überwachungsregelungsknoten (A) und der zweite Zulassungs- und Überwachungsregelungsknoten (B) nacheinander für ein eingehendes Paket (50) zugänglich sind; und
- umfasst:
• Mittel zum Übertragen der probabilistischen Ergebnisse, die von der Einrichtung zur probabilistischen Verkehrsanalyse (A1) des ersten Zulassungs- und Überwachungsregelungsknotens erzielt wurden und das eingehende Paket (50) betreffen, an den zweiten Zulassungs- und Überwachungsregelungsknoten (B);
• Mittel zum Empfangen, nacheinander oder gleichzeitig, der übertragenen probabilistischen Ergebnisse und des eingehenden Pakets (50) an dem zweiten Zulassungs- und Überwachungsregelungsknoten (B);
• Mittel zum Korrelieren der probabilistischen Ergebnisse, die von der Einrichtung zur probabilistischen Verkehrsanalyse (B1) des zweiten Zulassungs- und Überwachungsregelungsknotens (B) erzielt wurden, und der empfangenen probabilistischen Ergebnisse, die beide das eingehende Paket (50) betreffen;
• einen Entscheidungsagenten (B2) zum Entscheiden gemäß den Korrelationsergebnissen und dem Satz von Sicherheitsrichtlinien (B21).

7. Vorrichtung nach Anspruch 6, wobei die Einrichtung zur probabilistischen Verkehrsanalyse ein Deep Packet Inspection-Modul ist.

## Revendications

1. Procédé pour le contrôle d'admission et l'application de politique au sein de réseaux à base de paquets IP, lesdits réseaux à base de paquets IP incluant un premier noeud de contrôle d'admission et d'application de politique (A) qui est pourvu d'un analyseur de trafic probabiliste (A1), ledit procédé étant **caractérisé en ce qu'**il
- inclut un second noeud de contrôle d'admission et d'application de politique (B) qui est pourvu d'un analyseur de trafic probabiliste (B1), d'un agent de décision (B2) et d'un ensemble de politiques de sécurité (B21), le premier noeud de contrôle d'admission et d'application de politique (A) et le second noeud de contrôle d'admission et d'application de politique (B) étant accessibles consécutivement par un paquet entrant (50) ; et
- comprend les étapes suivantes :
• analyse du paquet entrant (50) par l'analyseur de trafic probabiliste (A1) du premier noeud de contrôle d'admission et d'application de politique (A) ;
• transmission des résultats probabilistes qui sont obtenus par l'analyseur de trafic probabiliste (A1) du premier noeud de contrôle d'admission et d'application de politique et concernant le paquet entrant (50) au second noeud de contrôle d'admission et d'application de politique (B) ;
• réception, successive ou conjointe, des résultats probabilistes transmis et du paquet entrant (50) par le second noeud de contrôle d'admission et d'application de politique (B) ;
• analyse du paquet entrant (50) reçu par l'analyseur de trafic probabiliste (B1) du second noeud de contrôle d'admission et d'application de politique (B);
• corrélation, par l'agent de décision (B2), des résultats probabilistes, obtenus par l'analyseur de trafic probabiliste (B1) du second noeud de contrôle d'admission et d'application de politique, et des résultats probabilistes reçus, tous deux concernant le paquet entrant (50) ;
• décision par l'agent de décision (B2) selon les résultats de corrélation et l'ensemble de politiques de sécurité (B21).

2. Procédé selon la revendication 1, dans lequel l'analyse du paquet entrant (50) est une inspection profonde des paquets.

3. Procédé selon la revendication 1 ou 2, dans lequel les décisions de l'agent de décision comprennent l'acceptation du paquet entrant (50) avec la demande de modification de certaines caractéristiques du paquet entrant (50).

4. Procédé selon l'une quelconque des revendications 1 à 3, dans lequel les résultats probabilistes, obtenus par l'analyseur de trafic probabiliste (A1) du premier noeud de contrôle d'admission et d'application de politique (A), sont transmis au second noeud de contrôle d'admission et d'application de politique (B) avec un protocole de signalisation.

5. Procédé selon la revendication 1 ou 3, dans lequel les résultats probabilistes, obtenus par l'analyseur de trafic probabiliste (A1) du premier noeud de contrôle d'admission et d'application de politique (A), sont marqués à l'intérieur du paquet entrant (50).

6. Réseau à base de paquets IP incluant un premier noeud de contrôle d'admission et d'application de politique (A) qui est pourvu d'un analyseur de trafic probabiliste (A1), ledit réseau à base de paquets IP étant **caractérisé en ce qu'**il
- inclut un second noeud de contrôle d'admission et d'application de politique (B) qui est pourvu d'un analyseur de trafic probabiliste (B1), d'un agent de décision (B2) et d'un ensemble de politiques de sécurité (B21), le premier noeud de contrôle d'admission et d'application de politique (A) et le second noeud de contrôle d'admission et d'application de politique (B) étant accessibles consécutivement par un paquet entrant (50) ; et
- comprend :
• moyens pour transmettre les résultats probabilistes obtenus par l'analyseur de trafic probabiliste (A1) du premier noeud de contrôle d'admission et d'application de politique (A) et concernant le paquet entrant (50) au second noeud de contrôle d'admission et d'application de politique (B) ;
• moyens pour recevoir, successivement ou conjointement, les résultats probabilistes transmis et le paquet entrant (50) par le second noeud de contrôle d'admission et d'application de politique (B) ;
• moyens pour corréler les résultats probabilistes, obtenus par l'analyseur de trafic probabiliste (B1) du second noeud de contrôle d'admission et d'application de politique, et les résultats probabilistes reçus, tous deux concernant le paquet entrant (50) ;
• un agent de décision (B2) pour décider selon les résultats de corrélation et l'ensemble de politiques de sécurité (B21)

7. Appareil selon la revendication 6, dans lequel l'analyseur de trafic probabiliste est un module d'inspection profonde des paquets.
